(19) Europäisches Patentamt / European Patent Office / Office européen des brevets

(11) **EP 3 501 858 B1**

(12) **EUROPEAN PATENT SPECIFICATION**

(45) Date of publication and mention
of the grant of the patent:
**02.06.2021 Bulletin 2021/22**

(51) Int Cl.:
**B60C 19/00** *(2006.01)*    **B60C 5/00** *(2006.01)*

(21) Application number: **18206487.3**

(22) Date of filing: **15.11.2018**

(54) **PNEUMATIC TYRE AND PNEUMATIC TYRE AND RIM ASSEMBLY**

LUFTREIFEN SOWIE LUFTREIFEN UND FELGENANORDNUNG

PNEUMATIQUE ET ENSEMBLE PNEUMATIQUE ET JANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2017 JP 2017242950**

(43) Date of publication of application:
**26.06.2019 Bulletin 2019/26**

(73) Proprietor: **SUMITOMO RUBBER INDUSTRIES,
LTD.
Kobe-shi,
Hyogo-ken 651-0072 (JP)**

(72) Inventors:
• **YUKAWA, Naoki
Kobe-shi, Hyogo 651-0072 (JP)**
• **SUZUKI, Toshiaki
Kobe-shi, Hyogo 651-0072 (JP)**
• **SATO, Takuya
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 1 659 004      EP-A2- 1 253 025
EP-A2- 1 795 377      JP-A- 2006 182 280
US-A1- 2006 231 185**

**Description**

BACKGROUND ART

Field of the Disclosure

The present invention relates to a pneumatic tire, and a tire and rim assembly capable of reducing road noise.

Description of the Related Art

A road noise is known as one of the tire noises. A primary cause of the road noise is resonance vibrations of air generated in the tire cavity. To reduce such resonance vibrations of air, JP 3622957 B2, EP 1 253 025 A1 and JP 2006-182280 A have each proposed a pneumatic tire which includes a tread portion provided with a sponge member on a tread inner surface. US 2006/0231185 A1 discloses a pneumatic tire having a belt-shaped sound absorbing member mounted on the radially inner surface of the tire by a fixing elastic band. EP 1 659 004 A1 shows a pneumatic tire according to the preamble of claim 1.

However, further reduction in road noise generated by tires has been required in view of recent quiet vehicles.

In view of the above problems in the conventional art, the present invention has a primary object to provide a pneumatic tire, and a tire and rim assembly capable of reducing road noise further.

Claim 1 provides a pneumatic tire according to the present invention.

The tread portion may further include a belt layer, wherein an axial width of each sponge member may be in a range of from 19% to 90% of an axial width of the belt layer.

A maximum thickness of each sponge member may be in a range of from 10 to 25 mm.

The sponge members may be arranged at regular intervals in the tire circumferential direction.

In each sponge member, differences in height between the protrusions and the recesses may be equal to or more than 5 mm.

In each sponge member, the protrusions and the recesses are arranged alternately in the tire circumferential direction.

In each sponge member, the protrusions may be continuous over an entire axial width of the sponge member at a constant height.

In each sponge member, the recesses may be continuous over an entire axial width of the sponge member at a constant height.

In each sponge member, an arrangement pitch of the protrusions is greater than an axial width of the sponge member.

In each sponge member, at least one of edges of the sponge member in the tire circumferential direction may be formed as one of the recesses.

In another embodiment of the invention, a pneumatic tire and rim assembly includes the pneumatic tire as mentioned above and a rim on which the pneumatic tire is mounted, wherein total volume of the sponge members is in a range of from 0.9% to 12.8% of a tire cavity volume enclosed by the pneumatic tire and the rim.

BRIEF DESCRIPTION OF THE DRAWINGS

FIG. 1 is a cross-sectional view of a tire/rim assembly in accordance with an embodiment of the invention ;
FIG. 2 is a cross-sectional view of a pneumatic tire under a standard state;
FIG. 3 is a perspective view of a sponge member,
FIG. 4 is a circumference sectional view of the tire/rim assembly along the tire equator C;
FIGS. 5A and 5B are perspective views of sponge members in accordance with other embodiments;
FIG. 6 is a perspective view of another embodiment of the sponge member;

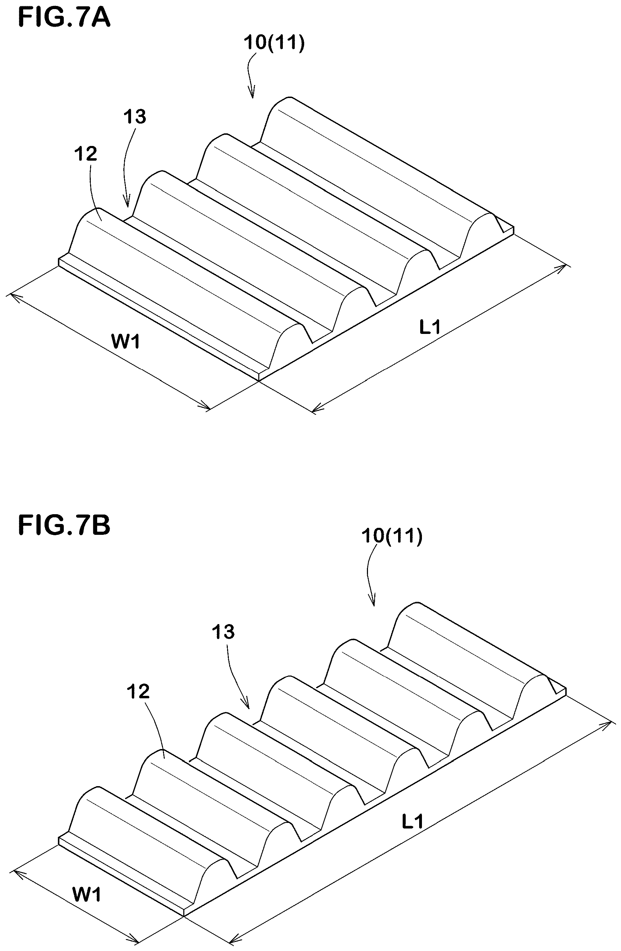

FIGS. 7A and 7B are perspective views of sponge members of examples; and

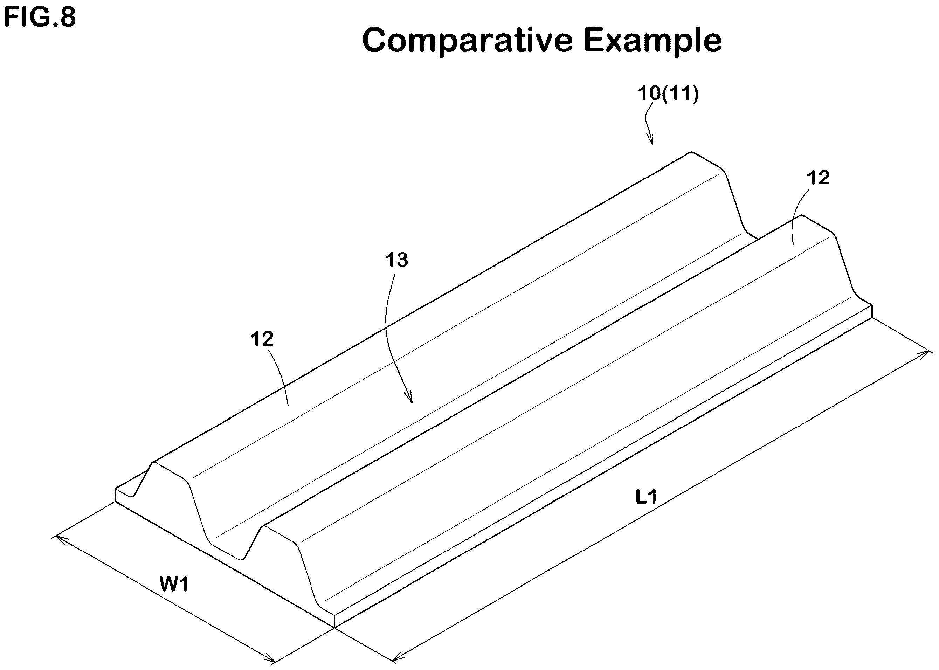

FIG. 8 is a perspective view of a sponge member of a comparative example.

DESCRIPTION OF THE PREFERRED EMBODIMENTS

An embodiment of the present invention will be explained below with reference to the accompanying drawings.

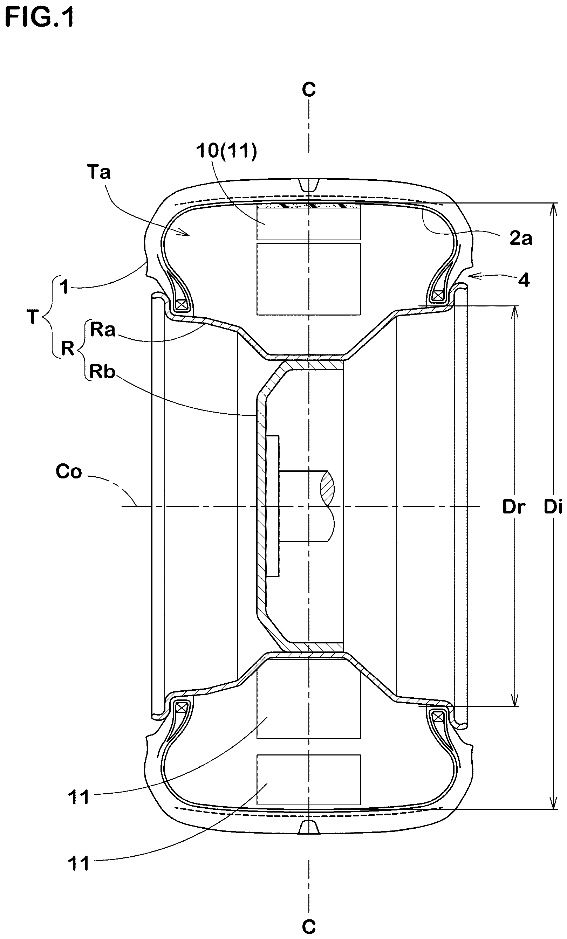

FIG. 1 illustrates a cross-sectional view of a tire/rim assembly (hereinafter, simply referred to as "assembly") T in accordance with an embodiment of the invention As illustrated in FIG. 1, the assembly T includes a rim R and a pneumatic tire (hereinafter, simply referred to as "tire") 1 which is mounted on the rim R. In this embodiment, as a preferred embodiment, a passenger car tire in which quiet is strongly required is illustrated. Note that the present invention may be embodied as different kinds of tires 1, e.g., directed to motorcycle, light truck, heavy-weight vehicle and the like.

The assembly T forms a tire cavity Ta enclosed by the rim R and the tire 1 when the tire 1 is mounted on the rim R.

The rim R according to the embodiment includes an annular rim main body Ra on which two bead portions 4 of the tire 1 are mounted, and a circular disc Rb for fixing the rim main body Ra to an axle, and the rim R is configured to be a standard rim having a conventional structure.

As used herein, the standard rim is a wheel rim officially approved for each tire by standards organizations on which the tire 1 is based, wherein the standard rim is the "standard rim" specified in JATMA, the "Design Rim" in TRA, and the "Measuring Rim" in ETRTO, for example.

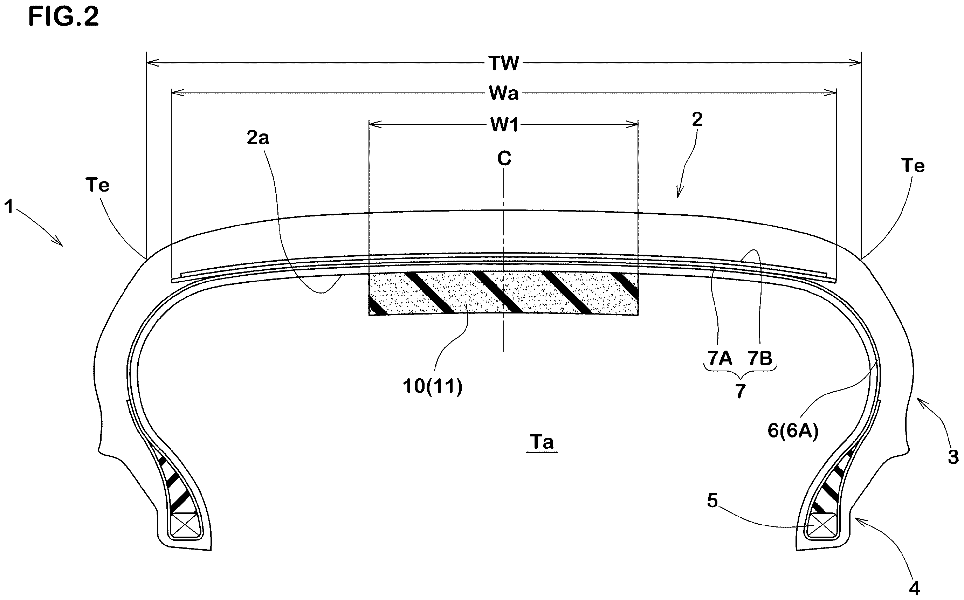

FIG. 2 illustrates a cross-sectional view of the tire 1 under a standard state. As illustrated in FIG. 2, the tire 1 according to the embodiment has a tubeless structure which includes a tread portion 2, axially spaced two sidewall portions 3 extending radially inward from both the respective both ends of the tread portions, and two bead portions 4 each positioned radially inward of each sidewall portion 3.

As used herein, the standard state is such that the tire 1 is mounted on the standard rim (the rim R) with a standard pressure but is loaded with no tire load. Unless otherwise noted, dimensions of respective portions of the tire 1 are values measured under the standard state.

As used herein, the standard pressure is a standard pressure officially approved for each tire by standards organizations on which the tire 1 is based, wherein the standard pressure is the "maximum air pressure" in JATMA, the maximum pressure given in the "tire Load Limits at Various Cold Inflation Pressures" table in TRA, and the "Inflation Pressure" in ETRTO, for example.

In this embodiment, the tire 1 includes a carcass 6 extending between bead cores 5 each disposed in a respective one of the bead portions 4 through the tread portion 2 and the sidewall portions 3, and a belt layer 7 disposed radially outside the carcass 6.

The carcass 6 includes at least one carcass ply 6A (one ply in the embodiment). The carcass ply 6A includes carcass cords embedded in a topping rubber, wherein the carcass cords are oriented at angles of from 75 to 90 degrees with respect to the tire equator C, for example.

The belt layer 7 is disposed radially outside the carcass 6 within the tread portion 2. The belt layer 7 includes at least two, in this embodiment, two belt plies 7A and 7B arranged in the tire radial direction. The belt plies 7A and 7B, for example, each includes belt cords embedded in a topping rubber. Note that a conventional band layer may be disposed radially outside the belt layer 7.

An axial width Wa of the belt layer 7 is not particularly limited, but is preferably in a range of from 60% to 110% of the tread width TW.

The tread width TW is the axial distance between tread edges Te. The tread edges Te are defined as axially outermost edges of the ground contacting patch of the tread portion 2 which occurs under a standard loaded condition. The standard loaded condition is such that the tire 1 is mounted on the standard rim R with the standard pressure and is loaded with a standard tire load when the camber angle of the tire is zero.

As used herein, the standard tire load is a tire load officially approved for each tire by standards organizations in which the tire 1 is based, wherein the standard tire load is the "maximum load capacity" in JATMA, the maximum value given in the above-mentioned table in TRA, the "Load Capacity" in ETRTO, for example.

The tire 1 according to the embodiment includes a noise damper 10 provided on a tread inner surface 2a of the tread portion 2. The noise damper 10, in this embodiment, is configured to includes a plurality of sponge members 11 arranged in the tire circumferential direction.

In this embodiment, each sponge member 11 has a porus structure which, for example, includes a so-called sponge made of foamed rubber or plastic, and an integrated member in which synthetic fibers, plant fibers or animal fibers are interwinded.

Here, the porous structure includes not only an open-cell but also closed-cell. Such sponge members 11 can absorb sound energy generated in the tire cavity Ta effectively to suppress resonance vibrations of air, thus reducing road noise. Further, since each sponge member 11 is easy to deform, e.g., compression, bending and the like, mounting property of the tire 1 onto the rim can be ensured. For the sponge members 11, for example, open-cell type spongy member such as ether polyurethane sponge, or ester polyurethane sponge can suitably be employed.

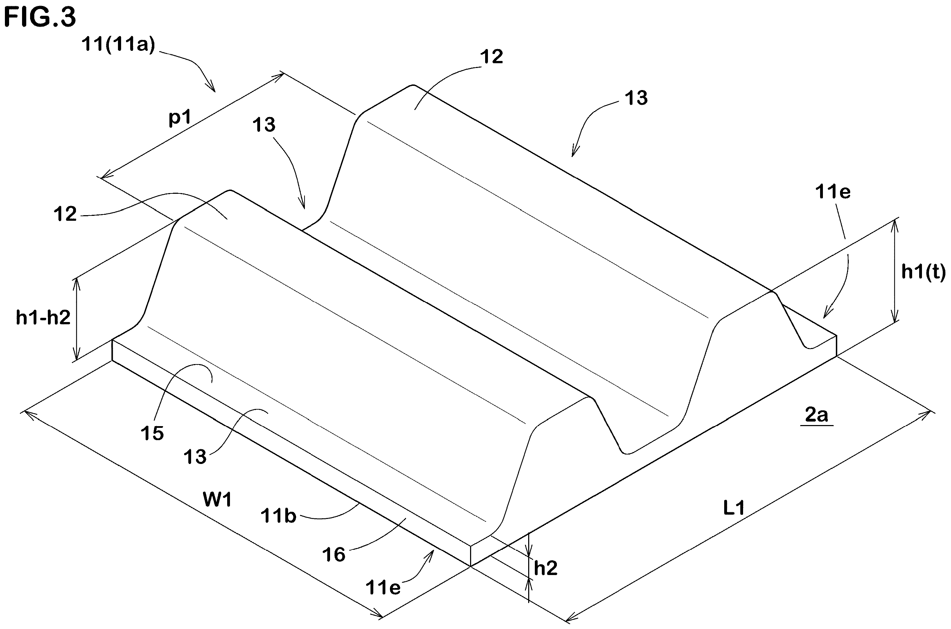

FIG. 3 illustrates a perspective view of one sponge member 11. As illustrated in FIG. 3, each sponge member 11 includes an inner surface 11a facing radially inward and an outer surface 11b facing radially outward (i.e., an opposite direction to the inner surface 11a). The outer surface 11b, in this embodiment, is fixed to the tread inner surface 2a of the tread portion 2 using a synthetic rubber adhesive

In this embodiment, the inner surface 11a includes protrusions 12 protruding radially inward and recesses 13 recessed radially outward, and the protrusions 12 and the recesses 13 are arranged alternately. In the tire 1 according to the embodiment, since the plurality of sponge members 11 each of which has the protrusions 12 and the recesses 13 alternately is arranged in the tire circumferential direction, road noise can further be reduced. This sound absorbing effect is synergistic effect which is brought about a combination of an increase of surface area of the inner surface 11a of each sponge member 11 by the protrusions 12 and the recesses 13, and an arrangement of the sponge members 11 arranged in the tire circumferential direction.

The inner surface 11a, in this embodiment, is provided with the protrusions 12 and the recesses 13 which are arranged alternately in the tire circumferential direction. Since the tire 1 is supposed to rotate around the tire axis Co (shown in FIG. 1), the air in the tire cavity Ta mainly flows along the tire circumferential direction. Thus, the protrusions 12 and the recesses 13 which are alternately in the tire circumferential direction can absorb resonance vibrations of air effectively, resulting in reducing road noise further. The inner surface 11a, in this embodiment, two protrusions 12 are provided.

In each sponge member 11, the protrusions 12 according to the embodiment are continuous over the entire axial width W1 of the sponge member 11 at a constant height h1. Further, in each sponge member 11, the recesses 13 are continuous over the entire axial width W1 of the sponge member 11 at a constant height h2. Such protrusions 12 and recesses 13 can absorb resonance vibrations effectively further.

In each sponge member 11 according to the embodiment, the inner surface 11a includes a flat surface portion 15 extending along (e.g. parallel with) the tread inner surface 2a and the protrusions 12 protruding radially inward from the flat surface portion 15, and thus the flat surface portion 15 forms the recesses 13.

In this embodiment, the protrusions 12, in a tire circumferential sectional view, has a trapezoidal shape tapering toward radially inwardly. Such protrusions 12 can exhibit better sound absorbing effect while suppressing an increase in mass of the sponge member 11. Note that the protrusions 12 are not particularly limited to such an aspect, but can be modified in various shapes, e.g., a triangular shape tapering toward radially inwardly (not illustrated), rectangular shape, wavy shape, and circular shape in the tire circumferential sectional view.

In each sponge member 11, at least one of edges 11e in the tire circumferential direction of the sponge member 11 is preferably formed as one of the recesses 13. When the one edge 11e is formed as one of the recesses 13, the edge 11e forms one recess surface and an end surface 16 connecting the recess surface and the tread inner surface 2a. Thus, in comparison with the edge 11e being formed as a protrusion 12, for example, surface area of the edge 11e becomes larger, improving absorbing resonance vibration effectively. Further, when the at least one edge 11e is formed as a recess 13, the at least one edge 11e of the sponge member 11 can be fixed to the tread inner surface 2a strongly, resulting in reducing road noise for a long term. In view of the above, both edges 11e in the tire circumferential direction of the sponge member 11 is preferably formed as recesses 13.

Preferably, in each sponge member 11, an arrangement pitch p1 of the protrusions 12 is greater than the axial width W1 of the sponge member 11. In other embodiments, such as the one shown in FIG. 3, the arrangement pitch p1 of the protrusions 12 is smaller than the axial width W1 of the sponge member 11. Thus, surface area of the inner surface 11a increases, resulting in suppressing resonance vibrations of air generated in the tire cavity further.

Preferably, an axial width W1 of each sponge member 11 is in a range of from 19% to 90% of the axial width Wa of the belt layer 7. When the axial width W1 of each sponge member 11 is less than 19% of the axial width Wa of the belt layer 7, it may be difficult to suppress resonance vibrations of air generated in the tire cavity. When the axial width W1 of each sponge member 11 is greater than 190% of the axial width Wa of the belt layer 7, it may be difficult to expect improving sound absorbing effect. More preferably, the axial width W1 of each sponge member 11 is in a range of from 40% to 70% of the axial width Wa of the belt layer 7.

In the same point of view, a maximum thickness (t) of each sponge members 11 is in a range of from 10 to 25 mm. In this embodiment, the maximum thickness (t) of each sponge member 11 corresponds to the heights h1 of the protrusions 12.

In each sponge member 11, the difference in height (h1-h2) between adjacent protrusion 12 and recess 13 is preferably equal to or more than 5 mm. Thus, the effect that increases surface area of the inner surface 11a can be ensured, resulting in suppressing road noise effectively. Preferably, the difference in height (h1-h2) is equal to or less than 20 mm, in order to suppress crack of the sponge members 11 due to vibration or rotation of the tire 1.

Preferably, a circumferential length L1 of each sponge member 11 is equal to or more than 50 mm in order to further suppress resonance vibrations of air. The upper limit of the length L1 of each sponge member 11 may be given according to the number of sponge members 11.

Preferably, the sponge members 11 have specific gravity of from 0.005 to 0.06, more preferably 0.010 to 0.05, yet further preferably 0.016 to 0.05, still further preferably 0.016 to 0.035 in order to further suppress resonance vibrations of air.

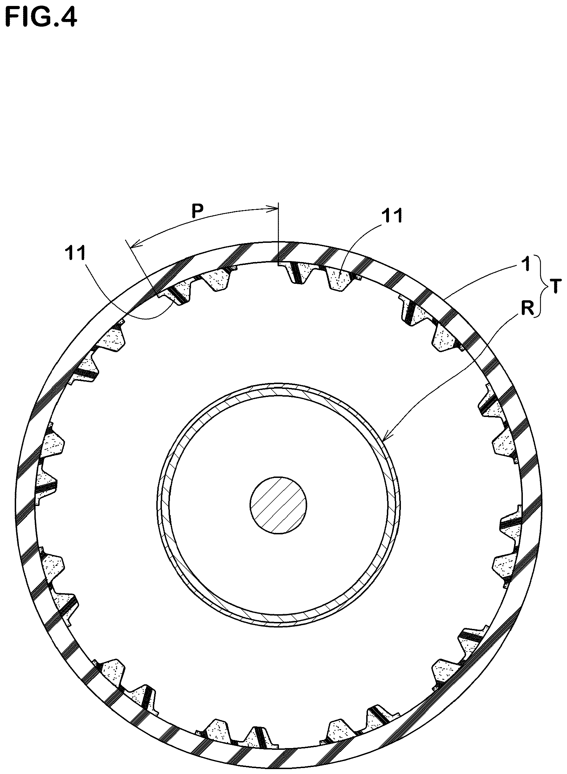

FIG. 4 illustrates a circumferential sectional view of the assembly T at the tire equator C. As illustrated in FIG. 4, the sponge member 11 are preferably arranged in the tire circumferential direction at regular intervals P so that a circumferential gap is provided between adjacent sponge members 11. In this embodiment, a circumferential length of the gap is shorter than the circumferential length L1 of each sponge member 11. This structure can suppress resonance vibrations of air further. When the sponge members 11 are arranged in such a manner, uniformity of the tire 1 can be maintained better, vibration of the tire 1 upon traveling can be suppressed. The sponge members 11, in this embodiment, are arranged in the entire tire circumferential region at the regular pitches P.

Preferably, total volume Va of the sponge members 11 is in a range of from 0.9% to 12.8% of a tire cavity volume V of the tire cavity Ta. Setting the total volume Va of the sponge members 11 being equal to or more than 0.9% of the tire cavity volume V, a sufficient reduction in road noise can be obtained. Setting the total volume Va of the sponge members 11 being equal to or less than 12.8% of the tire cavity volume V, excessive increase in mass of the tire 1 as well as unbalance of mass can be suppressed.

As used herein, the total volume Va of the sponge members 11 means the apparent entire volume of the sponge members 11 including inside bubbles. Further, the tire cavity volume V is defined under the standard state by the following approximate equation (1):

$$V = A \times \{(Di-Dr)/2 + Dr\} \times pi \cdots (1)$$

where "A" represents a cross sectional area of the tire cavity Ta of the assembly T which is not provided with sponge members 11, and which is measured using a CT scanning, "Di" represents the maximum outer diameter of the tire cavity Ta as shown in FIG. 1, "Dr" represents the rim diameter, and "pi" represents circular constant.

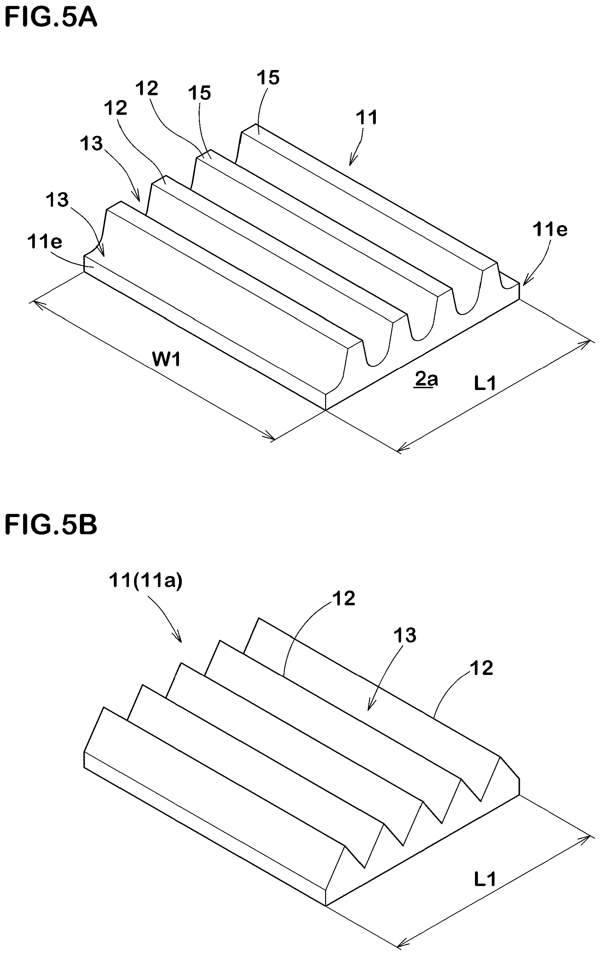

FIGS. 5A and 5B illustrate perspective view of the sponge members 11 according to other embodiments. In this embodiment as illustrated in FIG. 5A, the inner surface 11a of each sponge member 11 includes a flat surface portion 15 extending along (e.g. parallel with) the tread inner surface 2a, and recesses 13 recessed radially outwardly from the flat surface 15. Thus, the flat surface portion 15 forms a top surface of each protrusion 12. In this embodiment, the recesses 13, in the tire circumferential sectional view, each has a bottom having a circular shape. Further, both circumferential edges 11e of each sponge member 11 are configured as recesses 13. Note that the recesses 13 are not limited to such an aspect, but may be modified in various shapes, e.g., a triangular shape tapering toward radially inwardly (not illustrated), rectangular shape, and wavy shape in the tire circumferential sectional view.

In the embodiment as illustrated in FIG. 5B, in the tire circumferential sectional view, the protrusions 12 each are configured as a triangular shape tapering toward radially inwardly and the recesses 13 each are configured as a triangular shape tapering toward radially outwardly. That is, the sponge member 11 according to the embodiment is configured using only inclined surfaces with respect to the tire radial direction without having the flat surface portion extending along (e.g. parallel with) the tread inner surface 2a.

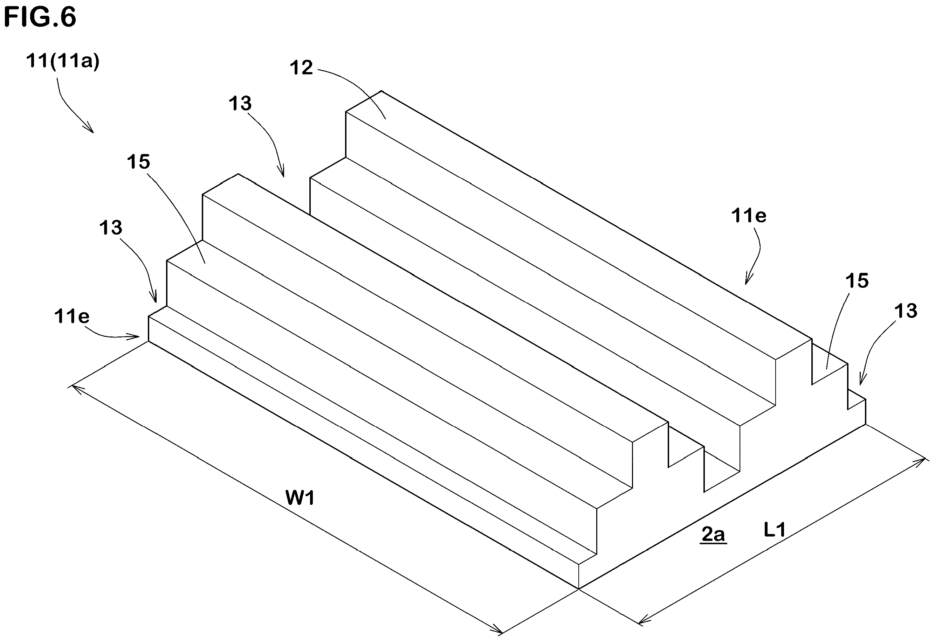

FIG. 6 illustrates a perspective view of one sponge member 11 according to yet another embodiment of the invention. As illustrated in FIG. 6, each sponge member 11 according to the embodiment includes the inner surface 11a which includes a standard flat surface portion 15 extending along (e.g. parallel with) the tread inner surface 2a, protrusions 12 each protruding radially inwardly from the standard flat surface portion 15, and recesses 13 recessed radially outwardly from the standard flat surface portion 15. In this embodiment, each of the protrusions 12 and the recesses 13 is configured as a rectangular shape in the tire circumferential sectional view. The circumferential both edges 11e of the sponge member 11 are configured as recesses 13, for example. Note that the protrusions 12 and the recesses 13 are not particularly limited to such an aspect, but can be modified in various aspects, e.g., a triangular shape, and a trapezoidal shape in the tire circumferential sectional view. Preferably, at a circumferential cross-sectional view of each sponge member 11, shapes of protrusions 12 are the same as the shapes of recesses 13.

[Example]

Tires of 215/55R17 having a basic structure as shown in FIG. 2 were manufactured by way of trial based on the specification in Table 1. Then, noise performance and vibration property of each test tire was tested. The common specification of each test tire and the test method are as follows:

    specific gravity of sponge members: 0.031
    sponge member material: ester polyurethane sponge (MARUSUZU CO., LTD., product No. E16)
    tire cavity volume V: 33.8 cm$^3$
    axial width Wa of belt layer: 178 mm

Note that in Table 1, "A" represents that the sponge members are arranged at regular pitches in the entire circumference of the tire, and "B" represents that the sponge members are arranged at regular pitches in the half circumference of the tire.

Noise performance test:

Each test tire was made to run on a drum tester under the following condition and the tire noise was measured by a microphone:

> rim: 17x7.5J,
> inner pressure: 240 kPa,
> tire load: 4.6 kN, and
> speed: 60 km/hr.

Then, the peak of the sound pressure level around 205 Hz, which corresponds to resonance vibrations of air generated in the tire cavity of the tire noise, was analyzed. In Table 1, the results are shown as reduced values in the sound level (db(A)) when compared with the sound level of a tire which does not include any sponge members. The larger the value, the better.

Vibration property test:

Each set of four test tires of Examples 2 and 11 was installed to a vehicle of 2000 cc displacement under the following condition:

> rim: 17x7.5J, and
> inner pressure: 240 kPa.

Then, a test driver drove the vehicle on a dry asphalt test course at about 100 km/hr to evaluate the degree of vibration by his sense.

[Table 1] (1/2)

| | Ref. 1 | Ref. 2 | Ref. 3 | Ex. 1 | Ex. 2 | Ex. 3 | Ex. 4 |
|---|---|---|---|---|---|---|---|
| Sponge member shapes | rectangular parallelepiped | FIG. 8 | rectangular parallelepiped | FIG. 3 | FIG. 3 | FIG. 3 | FIG. 3 |
| Number of sponge members | 1 | 1 | 1 | 12 | 8 | 4 | 2 |
| Protrusion heights h1 (mm) | 15 | 25 | 15 | 25 | 25 | 25 | 25 |
| (h1+h2)/2 (mm) | – | 15 | – | 15 | 15 | 15 | 15 |
| Sponge member widths W1 (mm) | 100 | 100 | 10 | 100 | 100 | 100 | 100 |
| Sponge member lengths L1 (mm) | 1950 | 1950 | 1950 | 100 | 100 | 100 | 100 |
| Total volume Va of sponge members ($mm^3$) | 2925 | 2925 | 292.5 | 1800 | 1200 | 600 | 300 |
| Ratio Va/V (%) | 8.6 | 8.6 | 0.9 | 5.3 | 3.5 | 1.8 | 0.9 |
| Ratio W1/Wa (%) | 56 | 56 | 6 | 56 | 56 | 56 | 56 |
| Layout of sponge members | — | — | — | A | A | A | A |
| Total mass of sponge members (g) | 91 | 91 | 9 | 56 | 37 | 19 | 9 |
| Noise performance [db(A)] | 3.1 | 4 | 0.4 | 6 | 3.1 | 2 | 1 |
| Vibration property | – | – | – | – | small | – | – |

[Table 1] (2/2)

| | Ex. 5 | Ex. 6 | Ex. 7 | Ex. 8 | Ex. 9 | Ex. 10 | Ex. 11 |
|---|---|---|---|---|---|---|---|
| Sponge member shapes | FIG. 3 | FIG. 3 | FIG. 3 | FIG. 3 | FIG. 7A | FIG. 7B | FIG. 3 |
| Number of sponge members | 18 | 18 | 4 | 4 | 4 | 4 | 8 |
| Protrusion heights h1 (mm) | 25 | 25 | 25 | 25 | 25 | 25 | 25 |
| (h1+h2)/2 (mm) | 15 | 15 | 15 | 15 | 15 | 15 | 15 |
| Sponge member widths W1 (mm) | 160 | 190 | 178 | 160 | 50 | 33.3 | 100 |
| Sponge member lengths L1 (mm) | 100 | 100 | 100 | 100 | 200 | 300 | 100 |
| Total volume Va of sponge members (mm$^3$) | 4320 | 5130 | 1068 | 960 | 600 | 600 | 1200 |
| Ratio Va/V (%) | 12.8 | 15.2 | 3.2 | 2.8 | 1.8 | 1.8 | 3.5 |
| Ratio W1/Wa (%) | 90 | 107 | 100 | 90 | 28 | 19 | 56 |
| Layout of sponge members | A | A | A | A | A | A | B |
| Total mass of sponge members (g) | 134 | 159 | 33 | 30 | 19 | 19 | 37 |
| Noise performance [db(A)] | 9.5 | 9.7 | 2.8 | 2.7 | 1.8 | 1.3 | 2.9 |
| Vibration property | – | – | – | – | – | – | large |

From the test results, as to noise performance, Ex. 1 is better than the References. In particular, Ex. 1 shows better noise performance than References 1 and 2 even though the total mass of the sponge members is small. The inventors have concluded that this result relies on that the protrusions and the recesses on the inner surface are arranged alternately in the tire circumferential direction with regular pitches. Ex. 2 shows the same noise performance as Ref. 1 even though the total mass of the sponge members is smaller than that of Ref. 1. As to Ex. 4, it is confirmed that when the total volume of the sponge members is 0.9% the tire cavity volume, the noise performance improves. Further, it is confirmed that although Ex. 4 has the same total mass of the sponge members as Ref. 3, it improves noise performance.

In comparison with Ex. 5 and Ex. 6, it is confirmed that the effect of improvement in noise performance in response to increasing of the total mass of the sponge members might reach the peak when the total volume of the sponge members to the tire cavity volume exceeds 12.8%. In comparison with Ex. 2 and Ex. 11, it is confirmed that when the sponge members are arranged in the entire tire circumferential region at the regular pitches, vibration property, as well as noise performance, can be improved in comparison to one in which the sponge members are arranged in the half tire circumferential region at the regular pitches.

**Claims**

1. A pneumatic tire (1) comprising:

   a tread portion (2) having a tread inner surface (2a) provided with a noise damper (10); and
   the noise damper (10) comprising sponge members (11) arranged in a tire circumferential direction,
   each sponge member (11) comprising an inner surface (11a) facing radially inwardly and an outer surface (11b) facing radially outwardly,
   wherein the inner surface (11a) of each sponge member (11) comprises protrusions (12) protruding radially inward and recesses recessed radially outward, and the protrusions (12) and the recesses (13) are arranged alternately,
   **characterized in that**
   a synthetic rubber adhesive fixes the outer surface (11b) of each sponge member (11) to the tread inner surface (2a) of the tread portion (2) and

in each sponge member (11), the protrusions (12) and the recesses (13) are arranged alternately in the tire circumferential direction.

2. The pneumatic tire (1) according to claim 1, the tread portion (2) further comprising a belt layer, wherein an axial width (W1) of each sponge member (11) is in a range of from 19% to 90% of an axial width (Wa) of a belt layer (7).

3. The pneumatic tire (1) according to claim 1 or 2, wherein a maximum thickness (t) of each sponge member (11) is in a range of from 10 to 25 mm.

4. The pneumatic tire (1) according to any one of claims 1 to 3, wherein the sponge members (11) are arranged at regular intervals (P) in the tire circumferential direction.

5. The pneumatic tire (1) according to any one of claims 1 to 4, wherein in each sponge member (11), differences in height between the protrusions (12) and the recesses (13) are equal to or more than 5 mm.

6. The pneumatic tire (1) according to any one of claims 1 to 5, wherein in each sponge member (11), the protrusions (12) are continuous over an entire axial width (W1) of the sponge member (11) at a constant height (h1).

7. The pneumatic tire (1) according to any one of claims 1 to 6, wherein in each sponge member (11), the recesses (13) are continuous over an entire axial width (W1) of the sponge member (11) at a constant height (h2).

8. The pneumatic tire (1) according to any one of claims 1 to 7, wherein in each sponge member (11), an arrangement pitch (p1) of the protrusions (12) is greater than an axial width (W1) of the sponge member (11).

9. The pneumatic tire (1) according to any one of claims 1 to 8, wherein in each sponge member (11), at least one of edges of the sponge member (11) in the tire circumferential direction is formed as one of the recesses (13).

10. A pneumatic tire and rim assembly (T) comprising: the pneumatic tire (1) of any one of claims 1 to 9 and a rim (R) on which the pneumatic tire (1) is mounted, wherein total volume of the sponge members (11) is in a range of from 0.9% to 12.8% of a tire cavity volume enclosed by the pneumatic tire (1) and the rim (R).

**Patentansprüche**

1. Luftreifen (1), umfassend:

einen Laufflächenabschnitt (2) mit einer Laufflächeninnenfläche (2a), die mit einem Geräuschdämpfer (10) versehen ist; und
wobei der Geräuschdämpfer (10) Schwammelemente (11) umfasst, die in einer Reifenumfangsrichtung angeordnet sind,
wobei jedes Schwammelement (11) eine radial nach innen gerichtete Innenfläche (11a) und eine radial nach außen gerichtete Außenfläche (11b) aufweist,
wobei die Innenfläche (11 a) jedes Schwammelements (11) radial nach innen vorstehende Vorsprünge (12) und radial nach außen vertiefte Ausnehmungen aufweist und die Vorsprünge (12) und die Ausnehmungen (13) abwechselnd angeordnet sind,
**dadurch gekennzeichnet, dass**
ein synthetischer Kautschukklebstoff die Außenfläche (11b) jedes Schwammelements (11) an der Laufflächeninnenfläche (2a) des Laufflächenabschnitts (2) fixiert und
in jedem Schwammelement (11) die Vorsprünge (12) und die Ausnehmungen (13) abwechselnd in Reifenumfangsrichtung angeordnet sind.

2. Luftreifen (1) nach Anspruch 1, wobei der Laufflächenabschnitt (2) ferner eine Gürtelschicht umfasst, wobei eine axiale Breite (W1) jedes Schwammelements (11) in einem Bereich von 19 % bis 90 % einer axialen Breite (Wa) einer Gürtelschicht (7) liegt.

3. Luftreifen (1) nach Anspruch 1 oder 2, wobei eine maximale Dicke (t) jedes Schwammelements (11) in einem Bereich von 10 bis 25 mm liegt.

4. Luftreifen (1) nach einem der Ansprüche 1 bis 3, wobei die Schwammelemente (11) in regelmäßigen Intervallen (P) in der Reifenumfangsrichtung angeordnet sind.

5. Luftreifen (1) nach einem der Ansprüche 1 bis 4, wobei in jedem Schwammelement (11) die Höhenunterschiede zwischen den Vorsprüngen (12) und den Ausnehmungen (13) gleich oder größer als 5 mm sind.

6. Luftreifen (1) nach einem der Ansprüche 1 bis 5, wobei in jedem Schwammelement (11) die Vorsprünge (12) über eine gesamte axiale Breite (W1) des Schwammelements (11) in einer konstanten Höhe (h1) durchgehend sind.

7. Luftreifen (1) nach einem der Ansprüche 1 bis 6, wobei in jedem Schwammelement (11) die Ausnehmungen (13) über eine gesamte axiale Breite (W1) des Schwammelements (11) in einer konstanten Höhe (h2) durchgehend sind.

8. Luftreifen (1) nach einem der Ansprüche 1 bis 7, wobei in jedem Schwammelement (11) ein Anordnungsteilungsabstand (p1) der Vorsprünge (12) größer ist als eine axiale Breite (W1) des Schwammelements (11).

9. Luftreifen (1) nach einem der Ansprüche 1 bis 8, wobei in jedem Schwammelement (11) mindestens eine der Kanten des Schwammelements (11) in der Reifenumfangsrichtung als eine der Ausnehmungen (13) ausgebildet ist.

10. Luftreifen- und Felgenanordnung (T), umfassend:
den Luftreifen (1) nach einem der Ansprüche 1 bis 9 und einer Felge (R), auf die der Luftreifen (1) aufgezogen ist, wobei das Gesamtvolumen der Schwammelemente (11) in einem Bereich von 0,9 % bis 12,8 % eines Reifenhohlraumvolumens liegt, das von dem Luftreifen (1) und der Felge (R) eingeschlossen ist.


**Revendications**

1. Bandage pneumatique (1) comprenant :

une portion formant bande de roulement (2) ayant une surface intérieure de bande de roulement (2a) dotée d'un amortisseur de bruit (10) ; et
l'amortisseur de bruit (10) comprenant des éléments formant éponges (11) agencés dans une direction circonférentielle du pneumatique,
chaque élément formant éponge (11) comprenant une surface intérieure (11a) faisant face radialement à l'intérieur et une surface extérieure (11b) faisant face radialement à l'extérieur,
dans lequel la surface intérieure (11a) de chaque élément formant éponge (11) comprend des projections (12) se projetant radialement vers l'intérieur et des évidements évidés radialement vers l'extérieur, et les projections (12) et les évidements (13) sont agencés en alternance,
**caractérisé en ce que**
un adhésif en caoutchouc synthétique fixe la surface extérieure (11b) de chaque élément formant éponge (11) sur la surface intérieure de bande de roulement (2a) de la portion formant bande de roulement (2), et
dans chaque élément formant éponge (11), les projections (12) et les évidements (13) sont agencés en alternance dans la direction circonférentielle du pneumatique.

2. Bandage pneumatique (1) selon la revendication 1, la portion formant bande de roulement (2) comprenant en outre une couche de ceinture, dans lequel
une largeur axiale (W1) de chaque élément formant éponge (11) est dans une plage allant de 19 % à 90 % d'une largeur axiale (Wa) d'une couche de ceinture (7).

3. Bandage pneumatique (1) selon la revendication 1 ou 2, dans lequel
une épaisseur maximum (t) de chaque élément formant éponge (11) est dans une plage allant de 10 à 25 mm.

4. Bandage pneumatique (1) selon l'une quelconque des revendications 1 à 3, dans lequel les éléments formant éponges (11) sont agencés à intervalles réguliers (P) dans la direction circonférentielle du pneumatique.

5. Bandage pneumatique (1) selon l'une quelconque des revendications 1 à 4, dans lequel dans chaque élément formant éponge (11), des différences en hauteur entre les projections (12) et les évidements (13) sont égales ou supérieures à 5 mm.

6. Bandage pneumatique (1) selon l'une quelconque des revendications 1 à 5, dans lequel dans chaque élément formant éponge (11), les projections (12) sont continues sur une largeur axiale (W1) entière de l'élément formant éponge (11) à une hauteur constante (h1).

7. Bandage pneumatique (1) selon l'une quelconque des revendications 1 à 6, dans lequel dans chaque élément formant éponge (11), les évidements (13) sont continus sur une largeur axiale (W1) entière de l'élément formant éponge (11) à une hauteur constante (h2).

8. Bandage pneumatique (1) selon l'une quelconque des revendications 1 à 7, dans lequel dans chaque élément formant éponge (11), un pas d'agencement (p1) des projections (12) est supérieur à une largeur axiale (W1) de l'élément formant éponge (11).

9. Bandage pneumatique (1) selon l'une quelconque des revendications 1 à 8, dans lequel dans chaque élément formant éponge (11), au moins un des bords de l'élément formant éponge (11) dans la direction circonférentielle du pneumatique est formé à titre d'un des évidements (13).

10. Bandage pneumatique et assemblage de jante (T) comprenant :
le bandage pneumatique (1) selon l'une quelconque des revendications 1 à 9 et une jante (R) sur laquelle le bandage pneumatique (1) est monté, dans lequel un volume total des éléments formant éponges (11) est dans une plage allant de 0,9 % à 12,8 % d'un volume de cavité de pneumatique enfermé par le bandage pneumatique (1) et la jante (R).

# FIG.1

# FIG.2

EP 3 501 858 B1

FIG.3

# FIG.4

## FIG.5A

## FIG.5B

FIG.6

## FIG.7A

10(11)

13

12

W1

L1

## FIG.7B

10(11)

13

12

W1

L1

# FIG.8

## Comparative Example

10(11)

12

13

12

W1

L1

EP 3 501 858 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3622957 B
- EP 1253025 A1
- JP 2006182280 A
- US 20060231185 A1
- EP 1659004 A1